# EUROPÄISCHE PATENTSCHRIFT

(11) **EP 2 331 880 B1**
(45) Veröffentlichungstag und Bekanntmachung des Hinweises auf die Patenterteilung: **05.07.2017**
(21) Anmeldenummer: 09776347.8
(22) Anmeldetag: 29.01.2009
(51) Int. Cl.: F24D 11/02, F24H 1/20, F28D 20/00

(54) **VERFAHREN UND VORRICHTUNG ZUR BEREITSTELLUNG NUTZBARER WÄRMEENERGIE**
METHOD AND DEVICE FOR PROVIDING USABLE HEAT ENERGY
PROCÉDÉ ET DISPOSITIF POUR OBTENIR DE L'ÉNERGIE THERMIQUE UTILE

(30) Priorität: 02.10.2008 DE 102008049954
(43) Veröffentlichungstag der Anmeldung: 15.06.2011
(73) Patentinhaber: Hahn, Thomas, 61137 Schöneck (DE)
(72) Erfinder: Hahn, Thomas, 61137 Schöneck (DE)
(74) Vertreter: Katscher Habermann Patentanwälte
(86) Internationale Anmeldenummer: PCT/EP2009/000582
(87) Internationale Veröffentlichungsnummer: WO 2010/037431

(56) Entgegenhaltungen:
- EP-A1- 0 117 796
- EP-A2- 0 134 184
- EP-A2- 1 895 241
- WO-A2-2008/025850
- DE-A1- 2 809 425
- FR-A1- 2 398 267
- FR-A1- 2 505 990
- US-A- 4 402 188
- US-A- 4 527 618
- US-A- 4 545 214
- US-A- 5 224 466
- US-A- 5 941 238
- US-A1- 2004 144 528

## Beschreibung

Die Erfindung betrifft ein Verfahren zur Bereitstellung nutzbarer Wärmeenergie eines Wärmeträgermediums in einem Innenraum eines thermisch isolierten Behälters, wobei das Wärmeträgermedium in einem unteren Bereich des Innenraums eine niedrigere Temperatur als in einem darüber angeordneten Bereich des Innenraums aufweist wobei dem Wärmeträgermedium in dem unteren Bereich durch Abkühlung Wärme entzogen und dem Wärmeträgermedium in dem darüber angeordneten Bereich durch Erwärmung zugeführt wird.

Es ist aus der Praxis bekannt, mittels geeigneter externer Wärmequellen ein Wärmeträgermedium in einem Innenraum eines thermisch isolierten Behälters zu erwärmen und die Wärmeenergie des Wärmeträgermediums in dem Behälter zu speichern. Eine thermische Isolierung umfasst in diesem Zusammenhang eine Wärmedämmung des Behälters mittels eines geeigneten Dämm-Materials mit dem Zweck, die in dem Behälter befindliche Wärmeenergie möglichst lange in dem Behälter zu halten und zu speichern und ein Abkühlen des Wärmeträgermediums möglichst lange hinauszuzögern. Derartige thermisch isolierte Behälter werden auch Schichtenspeicher genannt, da sich das Wärmeträgermedium in Abhängigkeit von einem vorgegebenen oder sich einstellenden Temperaturgradienten auf Grund der temperaturabhängigen Dichte des Wärmeträgermediums in übereinander angeordneten Schichten gleicher Temperatur anordnet. Die Temperatur des Wärmeträgermediums nimmt von unten nach oben kontinuierlich zu, wohingegen die Temperatur des Wärmeträgermediums innerhalb einer horizontalen Schicht weitgehend homogen ist und sich bei gegebenenfalls auftretenden lokalen Temperaturgradienten kurzfristig angleicht und auf einen einheitlichen Temperaturwert einstellt.

Die sich in einem derartigen Schichtenspeicher ausbildenden Schichten unterschiedlicher Temperaturen des Wärmeträgermediums ermöglichen eine voneinander weitgehend unabhängige Nutzung der jeweiligen Temperaturniveaus. Mit dem auf eine hohe Temperatur erwärmten Wärmeträgermedium aus einem oberen Bereich des Behälters kann beispielsweise über geeignete Wärmetauscher Brauchwasser erhitzt werden, um mit Temperaturen oberhalb von 40°C oder 50°C beispielsweise zum Duschen oder als Brauchwasser zur Verfügung gestellt zu werden. Mit dem Wärmeträgermedium aus darunter befindlichen Schichten können beispielsweise Niedrigtemperatur-Heizvorrichtungen wie beispielsweise eine Fußbodenheizung betrieben bzw. mit Wärmeenergie versorgt werden.

Es ist aus der Praxis bekannt, derartige Schichtenspeicher mit einer Umweltwärmequelle zu verbinden, um die von der Umweltwärmequelle abgegebene Wärme aufzunehmen, zu speichern und als nutzbare Wärmeenergie bereitzustellen. Geeignete Umweltwärmequellen sind beispielsweise aus der Praxis bekannte thermische Kollektoren bzw. Solarkollektoren oder geothermische Wärmequellen. Grundsätzlich ist natürlich die Verbindung bzw. die Nutzung beliebiger externer Energiequellen denkbar. Um die von den bevorzugt verwendeten Umweltenergiequellen erzeugte Wärmeenergie in den Behälter bzw. in das in dem Innenraum des Behälters befindliche Wärmeträgermedium zu überführen ist es bekannt, die externen Wärmequellen mittels geeigneter Wärmetauscher anzukoppeln oder aber beispielsweise das in dem Innenraum des Behälters befindliche Wärmeträgermedium direkt durch mit Sonnenenergie erwärmbare Solarkollektoren umzuwälzen und dabei zu erwärmen.

Aus der Praxis sind verschiedene hydraulische Maßnahmen zur vorteilhaften Vorgabe oder zur Erhaltung von Schichten des unterschiedlich erwärmten Wärmeträgermediums innerhalb des Behälters bekannt. Um eine möglichst effiziente Nutzung der in dem Behälter gespeicherten Wärmeenergie zu ermöglichen, ist es ebenfalls bekannt, mehrere an unterschiedlichen Temperaturniveaus des Wärmeträgermediums angeordnete Wärmetauscher innerhalb oder an dem Behälter vorzusehen, um die für die unterschiedlichen Anforderungen jeweils geeignete Temperatur des Wärmeträgermediums optimal nutzen zu können.

Bei dem aus der Praxis bekannten Verfahren der eingangs genannten Gattung tritt unabhängig von den jeweils im einzelnen durchgeführten Verfahrensschritten regelmäßig der Nachteil auf, dass eine Überführung von Wärmeenergie von einer externen Wärmequelle in den Schichtenspeicher nur dann einigermaßen effektiv durchgeführt werden kann, wenn das Temperaturniveau der extern zugeführten Wärmeenergie merklich oberhalb des Temperaturniveaus des Wärmeträgermediums in dem Schichtenspeicher ist. Vor diesem Hintergrund wird ein Wärmetauscher, der mit einer externen Umweltenergiequelle in Verbindung steht, üblicherweise in dem unteren Bereich des Schichtenspeichers angeordnet, um das dort üblicherweise herrschende geringe Temperaturniveau ausnutzen zu können. Allerdings hat die Praxis gezeigt, dass insbesondere im Winter, wenn die bekannten Umweltenergiequellen lediglich Wärmeenergie mit einem geringen Temperaturniveau erzeugen und anbieten können, auf Grund der geringen Temperaturdifferenz die Effizienz der Wärmeenergieübertragung in das Wärmeträgermedium gering ist und gleichzeitig der Bedarf an nutzbarer Wärmeenergie steigt bzw. besonders hoch ist.

Beispielsweise aus EP 0 134 184 A2 oder aus WO 2008/025850 A2 sind Schichtenspeicher bekannt, bei denen mit einer Wärmepumpe Wärme aus einem unteren Bereich des Schichtenspeichers in einen darüber angeordneten Bereich überführt werden kann, um die Temperaturdifferenz des Wärmeträgermediums zwischen dem unteren Bereich und dem darüber liegenden Bereich zu erhöhen. In US 2004/144528 A1 wird die Möglichkeit der Verwendung mehrerer Wärmepumpen bei einem Wassererhitzer beschrieben.

Aufgabe der vorliegenden Erfindung ist es demzufolge, ein Verfahren zur Bereitstellung nutzbarer Wärmeenergie der eingangs genannten Gattung so auszugestalten, dass die mit Umweltenergiequellen, wie beispielsweise mit thermischen Kollektoren oder Solarkollektoren, erzeugbare Wärmeenergie möglichst zu jeder Jahreszeit effektiv genutzt und insbesondere Wärmeenergie mit einem geringen Temperaturniveau möglichst effektiv in das Wärmeträgermedium überführt und als nutzbare Wärmeenergie bereitgestellt werden kann.

Diese Aufgabe wird erfindungsgemäß dadurch gelöst, dass die Wärme aus dem unteren Bereich durch mehrere Wärmepumpen in den darüber angeordneten Bereich des Behälters überführt wird, wobei die mehreren Wärmepumpen mit jeweils einem Verdampfer und einem Kondensator im Innenraum des Behälters angeordnet sind, wobei die mehrere Wärmepumpen kaskadenförmig angeordnet sind und wobei der Verdampfer einer übergeordneten Wärmepumpe in der Nähe des Kondensators einer darunter angeordneten Wärmepumpe angeordnet ist.

Durch die Umverteilung von Wärmeenergie innerhalb des Innenraums des thermisch isolierten Behälters wird die Temperatur des Wärmeträgermediums in dem unteren Bereich erniedrigt, so dass beispielsweise auch die Wärmeenergie von Umweltenergiequellen, die mit einer geringen Temperatur angeboten werden, auf Grund der durch die Umverteilung vergrößerten Temperaturdifferenz zu der Temperatur des Wärmeträgermediums in dem unteren Bereich effizienter in den Schichtenspeicher geführt werden kann. Gleichzeitig wird durch die Umverteilung die Temperatur in dem oberen Bereich des Schichtenspeichers erhöht und mehr bzw. effektiver nutzbare Wärmeenergie in dem oberen Bereich des Schichtenspeichers bereitgestellt.

Während der Betrieb einer Wärmepumpe üblicherweise mit einem Wärmeverlust bzw. mit einem Verlust an nutzbarer Energie in Verbindung gebracht wird, kann durch eine geeignete Anordnung eines Verdampfers und eines Kondensators der Wärmepumpe innerhalb des thermisch isolierten Behälters sichergestellt werden, dass der überwiegende Anteil der ansonsten in nicht nutzbare Energieformen umgewandelten Verlustenergie innerhalb des Schichtenspeichers zur Erwärmung des Wärmeträgermediums nutzbar wird bzw. verwendet werden kann und deshalb nicht zu einem Verlust an nutzbarer Wärmeenergie führt.

So könnte beispielsweise bei Verwendung einer Kompressionswärmepumpe die anfallende Verlustwärme des Kompressors mit dem Kältemittel in den Kondensator und damit in den isolierten Behälter übertragen werden. Als geeignete Kompressoren können beispielsweise aus der Praxis bekannte voll gekapselte Scroll-Verdichter verwendet werden.

Gemäß einer vorteilhaften Ausgestaltung des Erfindungsgedankens ist vorgesehen, dass die Temperatur des Wärmeträgermediums in dem unteren und/oder in dem oberen Bereich des Behälters erfasst wird und eine Überführung von Wärme aus dem unteren Bereich in dem darüber angeordneten Bereich in Abhängigkeit von den erfassten Temperaturwerten durchgeführt wird. Mit einem automatisierbaren, temperaturgesteuerten Betrieb der Wärmepumpe kann beispielsweise in der kälteren Jahreszeit das Temperaturniveau in dem unteren Bereich des Behälters durch Überführung von Wärme in den oberen Bereich abgesenkt werden, um eine größere Temperaturdifferenz zu der externen Wärmequelle vorzugeben. Insbesondere bei der Ausnutzung von Umweltwärmequellen wie beispielsweise thermische Solarkollektoren, Luftwärmetauscher oder geothermischen Wärmequellen, deren Energieniveau in kalten Jahreszeiten absinkt, kann eine Umverteilung von Wärmeenergie innerhalb des thermisch isolierten Behälters die Effizienz der Energiegewinnung und die Bereitstellung nutzbarer Wärmeenergie merklich verbessern. Gleichzeitig wird das Temperaturniveau in dem oberen Bereich des Behälters erhöht und dadurch mehr nutzbare Wärmeenergie auf hohem Temperaturniveau bereitgestellt.

Es ist denkbar und für bestimmte Anwendungsfälle, beziehungsweise Umgebungsbedingungen zweckmäßig, dass die Überführung von Wärme aus dem unteren Bereich in den darüber angeordneten Bereich nur im Bedarfsfall vorgenommen wird und über längere Zeiträume innerhalb eines Jahres nicht oder nur in Ausnahmefällen aktiviert wird. Sofern die in dem Behälter vorgenommenen Temperaturmessungen ergeben, dass sowohl das obere Temperaturniveau ausreichend hoch für die gewünschte Nutzung der in dem Behälter gespeicherten Wärmeenergie ist, als auch das untere Temperaturniveau ausreichend niedrig ist, um mit hinreichender Effizienz Wärmeenergie von einer externen Wärmequelle in den Behälter überführen zu können, kann auf den Betrieb und den hierfür erforderlichen Energieverbrauch einer Wärmepumpe verzichtet werden.

Die Überführung von Wärme aus dem unteren Bereich in den darüber angeordneten Bereich kann beispielsweise auch dann aktiviert werden, wenn die gemessenen Temperaturwerte nahe legen, dass die Temperatur des Wärmeträgermediums in dem oberen Temperaturbereich unter eine vorgegebene obere Mindesttemperatur absinkt und das Temperaturniveau, beziehungsweise die in dem oberen Bereich des Behälters gespeicherte Wärmeenergie möglicherweise nicht ausreichen wird, um den gewünschten oder vorgesehenen Bedarf decken zu können.

Ebenso kann es im Hinblick auf eine vorteilhafte Ansteuerung einer Wärmepumpe vorteilhaft sein, dass an der Temperatur einer von einer externen Wärmequelle zuführbaren Wärmeenergie gemessen wird und eine Überführung von Wärme aus dem unteren Bereich in den darüber angeordneten Bereich in Abhängigkeit von den erfassten Temperaturwerten durchgeführt wird. Insbesondere in den Fällen, in denen das Temperaturniveau der von einer externen Wärmequelle erzeugten, beziehungsweise zugeführten Wärmeenergie größeren Schwankungen unterworfen ist, kann ein davon abhängiger Betrieb der Wärmepumpe, beziehungsweise einer in Abhängigkeit von der im Temperaturniveau der externen Wärmequelle vorgenommenen Abkühlung des Wärmetemperaturmediums in dem unteren Bereich des Behälters zweckmäßig sein. Natürlich kann die Temperatur der externen Wärmequelle auch zusätzlich zu den Temperaturen des Wärmeträgermediums im Inneren des thermisch isolierten Behälters erfasst und für eine Steuerung, beziehungsweise Regelung einer Wärmepumpe verwendet werden.

Erfindungsgemäß können der Funktionsumfang der Ansteuerung der Wärmepumpe und damit der Betrieb der Vorrichtung so ausgestaltet werden, dass weitere ermittelbare oder vorgebbare Parameter oder gemessene Umgebungseigenschaften für die Ansteuerung berücksichtigt werden können. Insbesondere ist der kurzfristig zu erwartende Energiebedarf der Vorrichtung beispielsweise von dem Gebäude, den Bewohnern, der Wetterentwicklung, der Jahreszeit oder dem aktuell erwarteten oder gemessenen Sonnenverlauf oder anderen Umständen abhängig. Die Ansteuerung kann dann die Aufgabe übernehmen, über den momentanen Energieverbrauch hinaus das Temperaturniveau des Wärmeträgermediums, bzw. den Wärmeenergiegehalt in dem thermisch isolierten Behälter vorsorglich zu erhöhen oder in geeigneter Weise anzupassen.

Um die Ausnutzung von Wärmeenergie zu verbessern, die mit Umweltwärmequellen wie beispielsweise Solaranalagen, thermischen Kollektoren oder geothermischen Wärmequellen erzeugt wird und dem Behälter zugeführt werden soll, ist es vorgesehen, dass die Temperatur des Wärmeträgermediums in dem unteren Bereich des Behälters bis unterhalb von 0° Celsius abkühlbar ist. Eine derart starke Abkühlung des Wärmeträgermediums setzt die Verwendung eines geeigneten Wärmeträgermediums wie beispielsweise Wasser oder Thermoöl voraus. Dann ist auch in der kalten Jahreszeit eine Nutzung von Wärmeenergie mit einem Temperaturniveau von lediglich einigen Grad Celsius möglich, wie sie üblicherweise von thermischen Solarkollektoren oder oberflächennahen geothermischen Wärmequellen bei kalten Umgebungsbedingungen erzeugt und bereitgestellt werden kann. Bisher nicht sinnvoll verwertbare Niedrigtemperatur-Umweltwärme ist auf diese Weise effizient nutzbar.

Die Erfindung betrifft auch eine Vorrichtung zur Bereitstellung nutzbarer Wärmeenergie mit einem thermisch isolierten Behälter und mit einem in einem Innenraum des thermisch isolierten Behälters angeordneten Wärmeträgermedium und mit mehreren Wärmepumpen mit jeweils einem Verdampfer und einem Kondensator in dem Innenraum des thermisch isolierten Behälters, die eine Umverteilung der in dem Behälter gespeicherten Wärmeenergie aus einem unteren Bereich in einen darüber angeordneten Bereich ermöglichen, wobei die mehreren Wärmepumpen kaskadenförmig angeordnet sind und wobei der Verdampfer einer übergeordneten Wärmepumpe in der Nähe des Kondensators einer darunter angeordneten Wärmepumpe angeordnet ist. Durch die Anordnung der Verdampfer und der Kondensatoren in dem Innenraum des Behälters kann eine Umverteilung der in dem Behälter gespeicherten Wärmeenergie aus einem unteren Bereich in einen darüber angeordneten Bereich ermöglicht werden.

Bei bereits bekannten Anlagen wird eine Wärmepumpe üblicherweise dazu verwendet, ausgehend von einem externen niedrigeren Temperaturniveau die Temperatur des Wärmeträgermediums in dem thermisch isolierten Behälter zu erhöhen. Auf Grund der hierfür erforderlichen Energie für den Betrieb der Wärmepumpe sowie die in den Wärmetauschern auftretenden Wärmeenergieverluste ist die Effizienz derartiger Anlagen oftmals gering. Im Gegensatz zu extern angeordneten Wärmepumpen, die über Wärmetauscher mit dem Wärmeträgermedium in einem Behälter in Verbindung stehen und auf diesem Weg Wärmeenergie übertragen können, können bei einer Anordnung des Verdampfers und des Kondensators in dem Innenraum des thermisch isolierten Behälters unvermeidbar auftretende Wärmeenergieverluste der Wärmepumpe ebenfalls auf das den Verdampfer und den Kondensator umgebende Wärmeträgermedium übertragen und dadurch der nutzbaren Wärmeenergie zugeführt werden. Durch die Anordnung sogenannter Direktverdampfer, beziehungsweise Direktkondensatoren in dem thermisch isolierten Behälter wird ein ansonsten unvermeidbarer Energieverlust verhindert.

Es ist aber auch möglich, dass der Verdampfer und der Kondensator über geeignete Wärmetauscher mit einem unteren Bereich, bzw. einem oberen Bereich des Innenraums des Behälters thermisch leitend in Verbindung stehen. Die Wärmepumpe, bzw. der Verdampfer und der Kondensator können zusätzlich eine thermische Isolierung aufweisen, um Wärmeübertragungsverluste zu minimieren.

Die mehreren Wärmepumpen werden in vorteilhafter Weise mit unterschiedlichen Arbeitsmitteln oder unter Ausnutzung unterschiedlicher Funktionsweisen betrieben, so dass die Wärmepumpen sowohl unabhängig voneinander als auch in Kombination miteinander betrieben und zur Umverteilung von Wärmeenergie innerhalb des thermisch isolierten Behälters verwendet werden können.

Geeignete Arbeitsmittel für den Einsatz von zwei übereinander angeordneten Wärmepumpen innerhalb des thermisch isolierten Behälters können beispielsweise R404A in einer unteren Kompressionswärmepumpe und R134A in einer oberen Kompressionswärmepumpe sein.

Es ist ebenfalls denkbar, zusätzlich oder stattdessen mehrere Wärmepumpen parallel, also jeweils bei vergleichbarer Temperaturdifferenz und absoluten Temperatur im Bereich des Kondensators und des Verdampfers zu betreiben, sofern dadurch beispielsweise ein kostengünstigere Herstellung oder eine effizientere Ansteuerung möglich werden.

Die erfindungsgemäße Anordnung der Verdampfer innerhalb des isolierten Behälters verhindert weitgehend das Vereisen der Verdampfer. Im Falle einer betriebsbedingten oder zeitweise vorteilhaften und absichtlich angesteuerten Vereisung der Verdampfer findet innerhalb des Behälters weiterhin eine Wärmeübertragung statt. Durch das Einbringen von Umweltwärme wird diese Vereisung des Verdampfers innerhalb des Behälters rückgängig gemacht.

Bei bekannten Wärmepumpenanlagen kommt es im Falle der Vereisung des Verdampfers zu schlechten Wirkungsgraden und gegebenenfalls Betriebsunterbrechungen und zu einem nochmals erhöhten Energieaufwand für das Enteisen des Verdampfers.

Die direkte Anordnung der Verdampfer und der Kondensatoren der Wärmepumpe in dem thermisch isolierten Behälter ermöglicht es, dass beispielsweise solarthermische oder geothermische Wärmeenergie-Anlagen in Verbindung mit der erfindungsgemäßen Vorrichtung einen besseren Wirkungsgrad aufweisen und insbesondere die auf einem niedrigen Temperaturniveau zur Verfügung gestellte Wärmeenergie der externen Wärmequellen besser, beziehungsweise effizienter oder überhaupt genutzt werden kann.

Gemäß einer vorteilhaften Ausgestaltung des Erfindungsgedankens ist vorgesehen, dass die Vorrichtung eine Regeleinrichtung mit einem Temperaturfühler im Bereich des Verdampfers im unteren Bereich des Behälters und/oder mit einem Temperaturfühler im Bereich des Kondensators sowie mit einer Steuereinrichtung zur Steuerung des Betriebs der Wärmepumpen aufweist. Der Betrieb der Wärmepumpe kann auf diese Weise in Abhängigkeit von dem in dem unteren Bereich des Behälters oder in dem oberen Bereich des Behälters gemessenen Temperaturniveau geregelt, beziehungsweise angesteuert werden.

Um auch die Temperatur der von einer externen Wärmequelle zugeführten Wärmeenergie für die Steuerung der Wärmepumpen nutzen und in vorteilhafter Weise berücksichtigen zu können ist vorgesehen, dass der Behälter mit einer externen Wärmequelle verbindbar ist und einen Temperaturfühler für die von der externen Wärmequelle zuführbare Wärmeenergie aufweist.

Einer Ausgestaltung des Erfindungsgedankens zufolge ist vorgesehen, dass die Wärmepumpen Adsorptionswärmepumpen sind. Durch die Verwendung geeigneter Arbeitsmittel der als Adsorptionswärmepumpe ausgestalteten Wärmepumpe kann eine kontinuierliche oder periodische Prozessführung ermöglicht werden, ohne dass das Arbeitsmittel mit einer Pumpe umgewälzt werden muss. Geeignete Adsorptionswärmepumpen sind aus dem Stand der Technik bekannt.

Anstelle von Adsorptionswärmepumpen können auch Absorptionswärmepumpen oder Diffusionsabsorptionswärmepumpen verwendet werden. Die in dem jeweiligen Anwendungsfall bestmöglich geeignet erscheinende oder vorteilhaft einsetzbare Ausgestaltung und Funktionsweise einer Wärmepumpe kann anhand der relevanten Rahmenbedingungen individuell ermittelt und vorgegeben werden. Grundsätzlich können alle Wärmepumpen, bzw.

Wärmeumverteilungseinrichtungen zur Anwendung kommen, die auf einem beliebigen Kreisprozess beruhen, der innerhalb des Behälters sinnvoll betrieben werden kann und zur effektiven Wärmeumverteilung geeignet ist.

Bei Verwendung von Absorptionswärmepumpen können neben dem Verdampfer und dem Kondensator auch weitere notwendige Komponenten wie beispielsweise Austreiber und Absorber innerhalb des thermisch isolierten Behälters angeordnet werden. Auftretende Wärmeverluste des Austreibers und des Absorbers verbleiben innerhalb des thermisch isolierten Behälters und können weiter genutzt werden.

Um eine effizientere Ausnutzung eines für die Speicherung und Bereitstellung von nutzbarer Wärmeenergie verfügbaren Volumens in dem Innenraum des thermisch isolierten Behälters zu verbessern ist es vorteilhaft, dass das Wärmeträgermedium ein Latentwärmespeichermedium ist. Das Wärmeträgermedium kann dabei ganz oder teilweise aus einem geeigneten Latentwärmespeichermedium bestehen. Aus der Praxis bekannt sind dabei beispielsweise Mischungen aus Wasser und Paraffin oder Mischungen aus Wasser und geeigneten Salzen. Durch die Nutzung von Latentwärmespeichermedien kann die Speicherkapazität bei gleichbleibendem Volumen gegenüber beispielsweise Wasser als Wärmeträgermedium merklich erhöht werden.

Es kann auch vorgesehen sein und für bestimmte Anwendungen zweckmäßig werden, dass Wasser als Wärmeträgermedium verwendet und in dem thermisch isolierten Behälter gespeichert ist. Sofern durch geeignete, jedoch bereits bekannte konstruktive Maßnahmen sichergestellt werden kann, dass eine infolge einer Eisbildung unvermeidbare Volumenzunahme nicht zu einer unerwünschten Beschädigung des Behälters führt, kann auch Wasser als Latentwärmespeichermedium verwendet werden.

Nachfolgend werden einige Ausführungsbeispiele des Erfindungsgedankens näher erläutert, die in der Zeichnung dargestellt sind. Es zeigt:

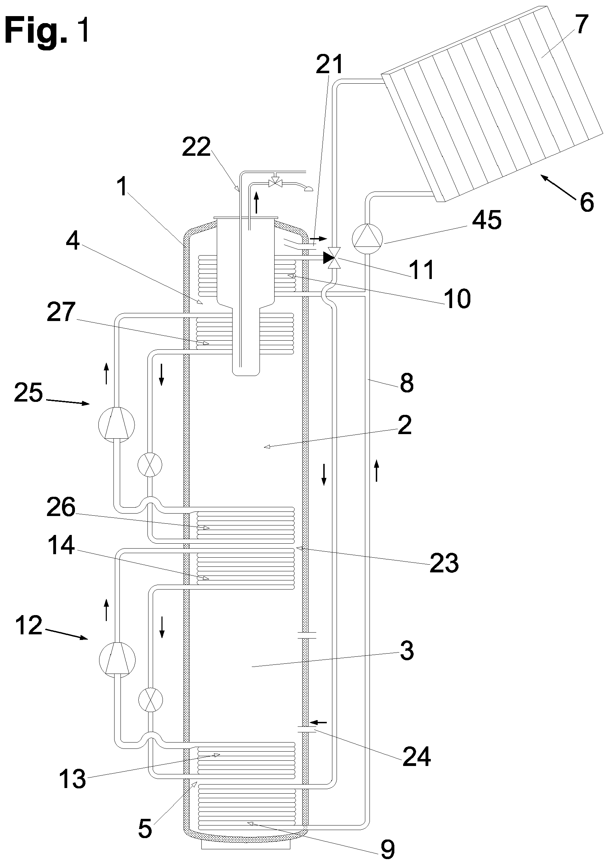

Fig. 1 eine schematische Darstellung einer erfindungsgemäßen Vorrichtung zur Bereitstellung nutzbarer Wärmeenergie mit einem Schichtenspeicher, in dessen Innenraum zwei Wärmepumpen eine mehrstufige Umverteilung der in dem Schichtenspeicher gespeicherten Wärmeenergie ermöglichen,

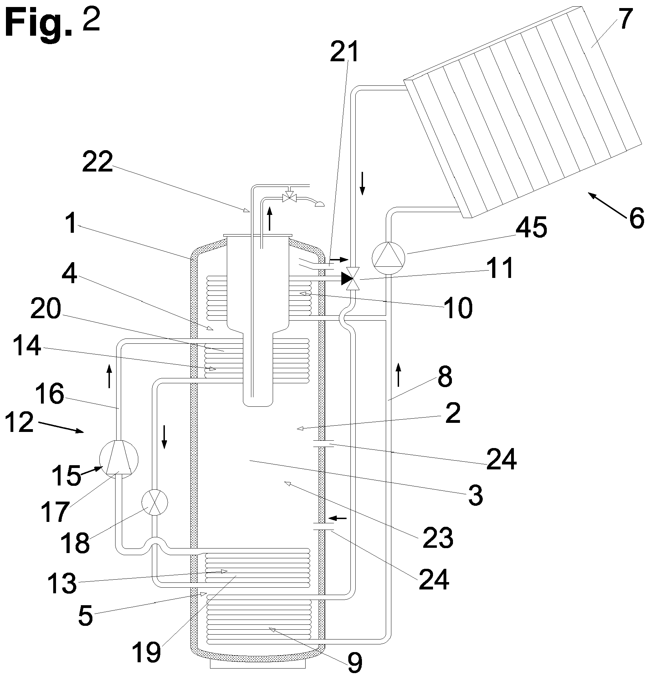

Fig. 2 eine schematische Darstellung einer Vorrichtung zur Bereitstellung nutzbarer Wärmeenergie mit einem Schichtenspeicher, in dessen Innenraum ein Wärmeträgermedium angeordnet ist, und mit einer Wärmepumpe, die einen Verdampfer und einen Kondensator aufweist, die in dem Innenraum des Schichtenspeichers angeordnet sind, wobei der besseren Übersichtlichkeit halber auf die Darstellung weiterer Wärmepumpen zu einer mehrstufigen Umverteilung der in dem Schichtenspeicher gespeicherten Wärmeenergie verzichtet wurde,

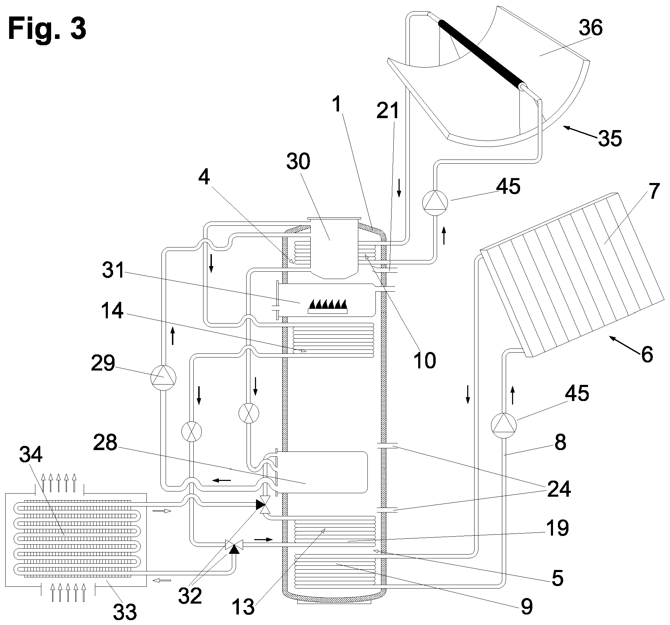

Fig. 3 eine schematische Darstellung einer Vorrichtung gemäß Fig. 2, wobei als Wärmepumpe eine Absorptionswärmepumpe verwendet wird, wobei zusätzlich eine externe Kühlvorrichtung mit dem Kältemittelkreislauf der Wärmepumpe in Verbindung steht und wobei der besseren Übersichtlichkeit halber auf die Darstellung weiterer Wärmepumpen zu einer mehrstufigen Umverteilung der in dem Schichtenspeicher gespeicherten Wärmeenergie verzichtet wurde,

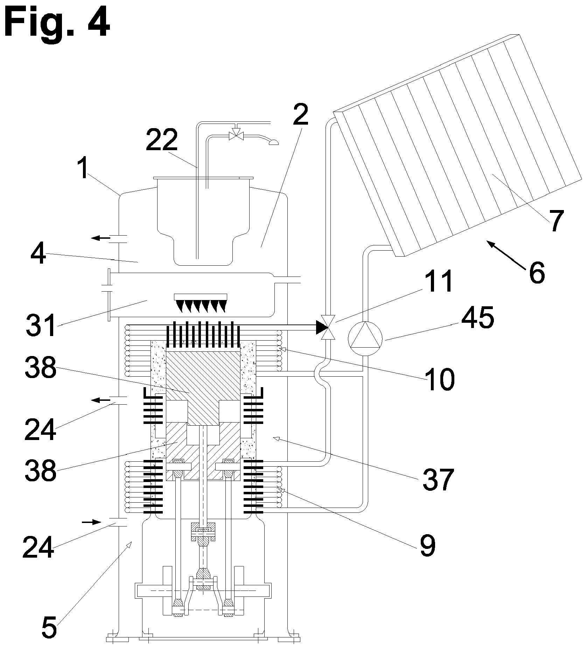

Fig. 4 eine schematische Darstellung einer nicht erfindungsgemäßen Vorrichtung gemäß Fig. 2, wobei als Wärmepumpe eine Vuilleumierwärmepumpe verwendet wird

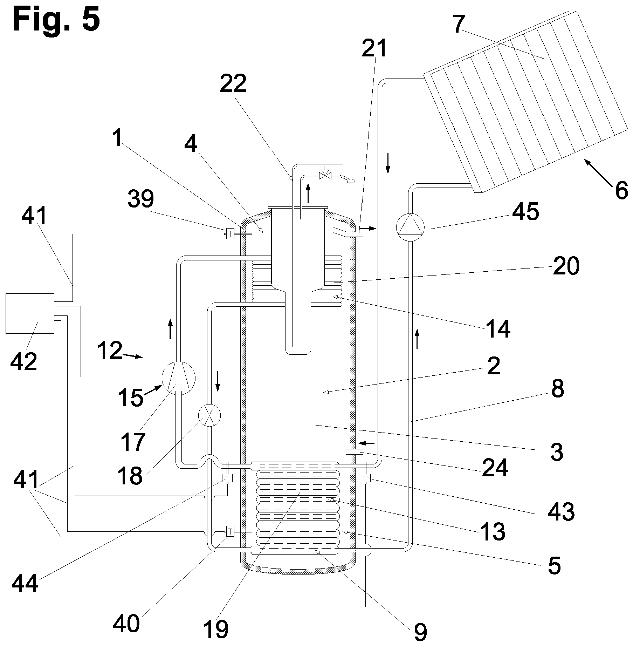

Fig. 5 eine schematische Darstellung einer Vorrichtung gemäß Fig. 2, wobei die Vorrichtung Temperaturfühler und eine Regelungseinrichtung aufweist und wobei der besseren Übersichtlichkeit halber auf die Darstellung weiterer Wärmepumpen zu einer mehrstufigen Umverteilung der in dem Schichtenspeicher gespeicherten Wärmeenergie verzichtet wurde.

Bei dem in Fig. 1 exemplarisch dargestellten Ausführungsbeispiel sind zwei Wärmepumpen 12 und 25 innerhalb des Innenraums 2 des Behälters 1 angeordnet. Der Verdampfer 13 der ersten Wärmepumpe 12 ist in dem unteren Bereich 5 des Behälters 1 angeordnet und kühlt während des Betriebs der Wärmepumpe 12 diesen Bereich ab. Der Kondensator 14 der ersten Wärmepumpe 12 ist in dem mittleren Bereich 23 des Innenraums 2 des Behälters 1 angeordnet und erwärmt das in diesem Bereich befindliche Wärmeträgermedium 3. Dort ist auch der Verdampfer 26 der zweiten Wärmepumpe 25 angeordnet, während der Kondensator 27 der zweiten Wärmepumpe 25 in dem oberen Bereich 4 in dem Innenraum 2 des Behälters 1 angeordnet ist.

Die beiden Wärmepumpen 12 und 25 können getrennt voneinander in Betrieb genommen werden, falls lediglich ein kurzzeitiger Bedarf an einer Abkühlung des unteren Bereichs 5 oder an einer Erwärmung des oberen Bereichs 4 besteht. In vorteilhafter Weise sind die beiden verwendeten Kältemittel der beiden Wärmepumpen 12, 25 jedoch unterschiedlich und derart aufeinander abgestimmt, dass beide Wärmepumpen 12, 25, gleichzeitig betrieben werden können und die jeweiligen Eingangs- und Ausgangstemperaturen aufeinander abgestimmt sind, um einen aneinander anschließenden, möglichst effizienten Betrieb der beiden Wärmepumpen 12, 25 und eine Umverteilung der Wärme von dem unteren Bereich 5 in den oberen Bereich 4 zu bewirken. Die Anschlüsse 24 für einen Niedrigtemperatur-Energieverbraucher können wie dargestellt zwischen dem unteren Verdampfer 13 und dem unteren Kondensator 14 oder aber in dem mittleren Bereich 23, bzw. benachbart zu dem unteren Kondensator 14 und dem oberen Verdampfer 26 angeordnet sein.

Bei den nachfolgend beschriebenen Ausführungsbeispielen wurde der Übersichtlichkeit halber jeweils lediglich eine Wärmepumpe dargestellt.

Die in Fig. 2 exemplarisch beschriebene Vorrichtung zur Bereitstellung nutzbarer Wärmeenergie weist einem thermisch isolierten Behälter 1 mit einem Innenraum 2 auf. In dem Innenraum 2 des Behälters befindet sich ein Wärmeträgermedium 3, beispielsweise Wasser oder Thermoöl. Der Innenraum 2 ist nicht in einzelne Kammern unterteilt und weist auch keine in den Innenraum 2 vorspringende Trennelemente oder Lamellen auf, so dass das in dem Innenraum 2 befindliche Wärmeträgermedium 3 sich frei bewegen kann. Weisen Teilmengen des Wärmeträgermediums 3 unterschiedliche Temperaturen auf, so verteilt sich das Wärmeträgermedium 3 innerhalb des Behälters 1 entsprechend der jeweiligen Temperatur des Wärmeträgermediums 3, wobei sich das relativ wärmere Wärmeträgermedium 3 auf Grund der etwas niedrigeren Dichte in einem oberen Bereich 4 des Behälters 1 sammelt, während sich das relativ dazu kältere Wärmeträgermedium 3 in einem unteren Bereich 5 des Behälters 1 sammelt. Das Wärmeträgermedium 3 verteilt sich demzufolge in Schichten gleicher Temperatur innerhalb des Behälters 1, der deshalb auch als Schichtenspeicher bezeichnet werden kann.

An den Behälter 1 ist eine externe Wärmequelle 6 angeschlossen, die das Wärmeträgermedium 3 in dem Behälter 1 erwärmen und auf diese Weise Energie in den Behälter 1 zuführen soll. Lediglich exemplarisch ist die Wärmequelle 6 als thermischer Solarkollektor mit einem Kollektor 7 dargestellt, der von einem Wärmeübertragungsmittel durchströmt wird, das bei Lichteinfall und insbesondere bei Sonneneinstrahlung in dem Kollektor 7 erwärmt werden kann. An Stelle einer Solaranlage mit Kollektoren 7 könnte auch jede andere geeignete externe Wärmequelle mit dem Behälter 1 verbunden sein, wobei insbesondere Umweltenergiequellen wie solarthermische, luftthermische oder geothermische Anlagen geeignet erscheinen.

Der Kollektor 7 ist über einen Kreislauf 8 für das Wärmeübertragungsmittel mit einem unteren Wärmetauscher 9 verbunden, der in dem unteren Bereich 5 des Behälters 1 angeordnet ist und eine Wärmeübertragung von dem in dem Kollektor 7 erwärmten Wärmeübertragungsmittel auf das den unteren Wärmetauscher 9 umgebende Wärmeträgermedium 3 ermöglicht. Da sich in dem unteren Bereich 5 des Behälters 1 das kühlere Wärmeträgermedium 3 sammelt, reicht zumindest an sonnigen Tagen die Sonneneinstrahlung auf den Kollektor 7 aus, um das Wärmeübertragungsmittel stärker zu erwärmen als den kühleren Anteil des Wärmeträgermediums 3 und dadurch eine ausreichende Wärmeübertragung und Energiezuführung in den Behälter 1 bewirken zu können.

An besonders sonnigen Tagen, bzw. bei einer ausreichend hohen Temperatur des extern bereit gestellten Wärmeübertragungsmittels, kann das Wärmeübertragungsmittel auch über einen oberen Wärmetauscher 10 direkt in den oberen Bereich 4 des Behälters 1 eingeleitet werden, um das bereits auf einer höheren Temperatur befindliche Wärmeträgermedium 3 in diesem Bereich zusätzlich aufzuwärmen. Mittels eines Umschaltventils 11 kann vorgegeben werden, welcher Bereich in dem Behälter 1 mit dem extern erwärmten Wärmeübertragungsmittel zusätzlich erwärmt werden soll.

Darüber hinaus weist die erfindungsgemäße Vorrichtung eine Wärmepumpe 12 mit einem Verdampfer 13 und einem Kondensator 14 auf. Ein geeignetes Kältemittel der Wärmepumpe 12 wird mittels einer Pumpe 15 in einem Wärmepumpenkreislauf 16 umgewälzt, wobei das verdampfte Kältemittel auf dem Weg in den Kondensator 14 mit einem Verdichter, bzw. Kompressor 17 komprimiert und anschließend das Kältemittel auf dem Weg von dem Kondensator 14 zum Verdampfer 13 mittels eines Expansionsventils 18 wieder auf den Ausgangsdruck entspannt wird.

Der Verdampfer 13 ist in dem unteren Bereich 5 des Behälters 1 in dessen Innenraum 2 angeordnet, während der Kondensator 14 in dem oberen Bereich 4 des Behälters in dessen Innenraum 2 angeordnet ist. Um Wärmeverluste zu vermeiden, wie sie bei Verwendung von Wärmetauschern notwendigerweise anfallen, weist der Verdampfer 13 gewendelte Rohrleitungen 19 auf, die in dem unteren Bereich 5 in dem Innenraum 2 des Behälters 1 in unmittelbarem Kontakt mit dem Wärmeträgermedium 3 stehen. Ebenfalls weist der Kondensator 14 gewendelte Rohrleitungen 20 auf, die in dem oberen Bereich 4 in dem Innenraum 2 des Behälters 1 in unmittelbarem Kontakt mit dem Wärmeträgermedium 3 stehen. Der Wärmeübergang zwischen dem Kältemittel der Wärmepumpe 12 und dem Wärmeträgermedium 3 findet demzufolge ohne zusätzliche Wärmetauscher innerhalb des Behälters 1 und damit sehr effizient statt.

Unvermeidbar anfallende Wärmeverluste im Bereich des Verdampfers 13 oder des Kondensators 14 führen auf Grund der Anordnung des Verdampfers 13 und des Kondensators 14 innerhalb des thermisch isolierten Behälters 1 zu einer lokal begrenzten Erwärmung des umgebenden Wärmeträgermediums 3, das sich entsprechend der gestiegenen Temperatur in eine höhere Schicht innerhalb des Behälters 1 aufsteigt. Die abgegebene Wärme, bzw. die Wärmeenergie verbleibt jedoch innerhalb des thermisch isolierten Behälters 1 und erhöht die in dem Behälter 1 verfügbare nutzbare Wärmeenergie.

Auch die Pumpe 15, der Kompressor 17 und das Expansionsventil 18 sowie gegebenenfalls der gesamte Wärmepumpenkreislauf 16 können innerhalb des thermisch isolierten Behälters 1 angeordnet sein, um weitere Wärmeverluste zu vermeiden, bzw. zu verringern. Um eine einfache Wartung zu erleichtern können aber einzelne Komponenten 15, 17 oder 18 sowie einzelne Abschnitte des Wärmepumpenkreislaufs 16 außerhalb des thermisch isolierten Behälters 1 angeordnet sein, wie es in Fig. 1 exemplarisch dargestellt ist.

Wenn die Wärmepumpe 12 in Betrieb genommen wird, so kühlt die Wärmepumpe 12 das den Verdampfer 13 umgebende Wärmeträgermedium 3 in dem unteren Bereich 5 des Behälters 1 weiter ab, während die Temperatur des Wärmeträgermediums 3 in dem oberen Bereich 4 zusätzlich erhöht wird. Es wird Wärmeenergie aus dem unteren Bereich 5 in den oberen Bereich 4 überführt und die nutzbare Wärmeenergiemenge vergrößert. Gleichzeitig wird die Temperatur des Wärmeträgermediums 3 in dem unteren Bereich 5 des Behälters 1 abgesenkt, wodurch ein Wärmeübertrag des extern zugeführten Wärmeübertragungsmittels aus dem Kollektor 7 effizienter wird und eine wirtschaftlich sinnvolle Ausnutzung von Umweltenergie wie beispielsweise Sonnenenergie verbessert, bzw. über einen wesentlich längeren Zeitraum innerhalb eines Jahres effizient ermöglicht wird.

In dem oberen Bereich 4 des Behälters 1 kann durch das beispielsweise auf 65° Celsius oder höher erwärmte Wärmeträgermedium 3 heißes Brauchwasser erwärmt und über geeignete Anschlüsse 21 und Verbindungsleitungen 22 einer lediglich angedeutete Heißwasserversorgung einer Wohneinheit oder aber beispielsweise einer Radiatorenheizung zugeführt werden. Das etwas kühlere Wärmeträgermedium 3 in einem mittleren Bereich 23 des Innenraums 2 des Behälters 1 kann über geeignete Anschlüsse 24 einer Niedrigtemperatur-Heizvorrichtung wie beispielsweise einer nicht dargestellten Fußbodenheizung zugeführt werden. Die Anschlüsse 24 können auch als Rücklauf für die Heißwasserversorgung oder Radiatorenheizung etc. verwendet werden. Durch den Einsatz der Wärmepumpe 12 kann einerseits eine ausreichende Erwärmung des Brauchwassers in dem oberen Bereich 4 des Behälters 1 sichergestellt werden und gleichzeitig eine Abkühlung des unteren Bereichs 5 erreicht werden, um eine effektivere Einspeisung von Energie aus externen Umweltenergiequellen zu ermöglichen.

Es ist auch möglich, auf den oberen Wärmetauscher 10 und damit auf eine Einleitung des in dem Kollektor 7 erwärmten Wärmeübertragungsmittels in den oberen Bereich 4 des Behälters 1 zu verzichten. Insbesondere bei einer derartigen Ausgestaltung sind für die Vorrichtung insgesamt nur sehr wenig Bauteile erforderlich, die sämtlich handelsüblich und kostengünstig erworben werden können, da es sich um in der Praxis bereits erprobte und in Großserie hergestellte Bauteile handelt. Auch die Nachrüstung bereits bestehender Wärmespeicheranlagen ist in einfacher und kostengünstiger Weise möglich.

Bei dem in Fig. 3 schematisch dargestellten Ausführungsbeispiel wird als Wärmepumpe eine Absorptionswärmepumpe verwendet. Ein bei niedrigen Temperaturen siedendes Kältemittel wie beispielsweise Ammoniak (R717) wird bei niedrigem Temperatur- und Druckniveau in dem Verdampfer 13 verdampft und strömt in einen Absorber 28, wo es von einem geeigneten Lösungsmittel wie beispielsweise Wasser absorbiert wird. Mittels einer Lösungsmittelpumpe 29 wird das Stoffpaar dann in den Austreiber 30 gefördert. Dort wird durch Zuführung von externer Energie, hier von einem Gasbrenner 31, das Kältemittel bei höherem Druck verdampft und von dem Lösungsmittel getrennt. Während das Kältemittel in dem Kondensator 14 kondensiert und dabei Wärme abgibt, wird das Lösungsmittel über eine gesonderte Leitung entspannt und wieder direkt dem Absorber 28 zugeführt.

In dem Kältemittelkreislauf kann unmittelbar vor dem Kondensator 14 über das parallele Schalten beider Umschaltventile 32 eine externe Kühlvorrichtung 33 wie beispielsweise ein Klimagerät oder eine Raumkühlung angeschlossen sein. Das kondensierte und abgekühlte Kältemittel verdampft dann in einem geeigneten Wärmetauscher 34, welcher an die Kühlvorrichtung 33 angebunden ist.

Durch jeweils paralleles Schalten der beiden Umschaltventile 32 wird entweder der Verdampfer 13 im unteren Bereich 5 des Behälters 1 oder der Wärmetauscher 34 als Verdampfer eingesetzt. Erfindungsgemäß kann zur effizienten Nutzung der Umweltenergie im Bedarfsfall zyklisch wechseln die Verdampfung des Kältermittels in der Kühlvorrichtung 33 oder im Verdampfer 13 innerhalb des Behälters 1 erfolgen.

Lediglich exemplarisch ist bei dem in Fig. 3 abgebildeten Ausführungsbeispiel zusätzlich zu der externen Wärmequelle 6 mit dem Kollektor 7 eine weitere externe Wärmequelle 35 mit einer Parabolkollektoranordnung 36 dargestellt. Die auf diese Weise gewonnene Umweltenergie wird über einen separaten Kreislauf dem Behälter 1 im Bereich des Austreibers 30 zugeführt.
Erfindungsgemäß kann für den Einsatz einer Absorptionswärmepumpe vorgesehen sein, während des Betriebs zeitweise auf den Einsatz eines Brenners wie beispielsweise den in Fig. 3 dargestellten Gasbrenner 31 zu verzichten. Dies könnte immer dann der Fall sein, wenn das durch Umwelt- oder Solarenergie mittels geeigneter Kollektoren wie beispielsweise durch den in Fig. 3 dargestellten Parabolkollektor 36 oder einen Vakuum-Röhrenkollektor erwärmte und dem Behälter zugeführte Wärmeübertragungsmittel eine Temperatur von mehr als beispielsweise 120 Grad Celsius aufweist.

Erfindungsgemäß ist weiterhin der Einsatz einer Absorptionswärmepumpe ohne einen integrierten Gasbrenner 31 möglich. Die notwendige Temperatur des Austreibers 30 von üblicherweise mehr als 120 Grad Celsius kann bei geeigneten Kollektoren durch Umwelt- oder Solarwärme erzeugt werden und direkt oder über Wärmetauscher im Bereich des Austreibers in den Behälter 1 eingebracht werden.

Diese Ausgestaltung des Erfindungsgedankens führt zu einer Erhöhung der nutzbaren Umweltwärme bei gleichbleibender Kollektorfläche, indem durch die Umschichtung und Abkühlung im unteren Bereich 5 des Behälters 1 eine Abkühlung des unteren Wärmetauschers 9 bewirkt wird. Damit erhöht sich die Temperaturdifferenz zwischen einem Vorlauf und einem Rücklauf des Kollektors 7, so dass eine größere Wärmemenge in den Behälter 1 eingebracht werden kann. Die Leistung, bzw. der Wirkungsgrad einer solchen Anlage lässt sich durch die Verwendung einer mehrstufigen Absorptionswärmepumpe oder durch eine kaskadenartige Anordnung mehrerer Absorptionswärmepumpen innerhalb des Behälters 1 sowohl in Bezug auf die Wärmeleistung als auch auf die erreichbare Maximaltemperatur steigern.

In Fig. 4 wird lediglich schematisch eine nicht erfindungsgemäße Vorrichtung dargestellt, bei der eine Vuilleumierwärmepumpe 37 eingesetzt wird. Über zwei Verdrängerkolben 38 wird ein geeignetes Arbeitsmedium wie beispielsweise Helium umgewälzt, wobei Energie über zwei unterschiedliche Wärmequellen (Umweltenergie und Gasbrenner) zugeführt und eine sehr effiziente Energieumwandlung in nutzbare Wärmeenergie ermöglicht wird. In Fig 5. Ist schematisch eine geregelte Ansteuerung der Wärmepumpe 12 des in Fig. 2 dargestellten Ausführungsbeispiels abgebildet. Über einen Temperaturfühler 39 im oberen Bereich 4 des Behälters 1 und einen Temperaturfühler 40 im unteren Bereich 5 des Behälters 1 können die lokalen Temperaturverhältnisse des Wärmeträgermediums 3 im Bereich des Verdampfers 13 und des Kondensators 14 ermittelt werden. Die Temperaturfühler 39, 40 sind über Signalübertragungsleitungen 41 mit einer Regelungseinrichtung 42 verbunden, mittels derer die gemessenen Temperaturwerte im oberen Bereich 4 sowie im unteren Bereich 5 des Wärmeträgermediums 3 ausgewertet und eine gegebenenfalls in Abhängigkeit zusätzlicher Steuerinformationen angepasste Ansteuerung der Wärmepumpe 12, bzw. der Pumpe 15 vorgenommen werden kann.

Weiterhin ist an der Zuführung der externen Wärmequelle 6 ein Temperaturfühler 43 vorgesehen, mit welchem die Temperatur des von der externen Wärmequelle 6 zugeführten Wärmeübertragungsmittels gemessen werden kann. Dieser Temperaturfühler 43 steht ebenfalls über Signalübertragungsleitungen 41 mit der Regelungseinrichtung 42 in Verbindung. Die Regelungseinrichtung 42 kann für eine Ansteuerung der Wärmepumpe 12 die Temperatur des zugeführten Wärmeübertragungsmittels, bzw. die Temperaturdifferenz des Wärmeübertragungsmittels zu dem Wärmeträgermedium 3 in dem unteren Bereich 5 des Behälters 1 berücksichtigen. Vorsorglich kann mittels eines weiteren Temperaturfühlers 44 auch die Temperatur des Kältemittels der Wärmepumpe 12 unmittelbar nach Verlassen des Verdampfers 13 überwacht und für die Ansteuerung der Wärmepumpe 12 berücksichtigt werden.

Auf diese Weise kann beispielsweise im Bedarfsfall eine zusätzliche Erwärmung des Wärmeträgermediums 3 im oberen Bereich 4 des Behälters 1 vorgenommen werden, falls die gespeicherte Wärmemenge nicht ausreichen sollte, um den anfallenden Bedarf decken zu können. Die Wärmepumpe 12 kann auch in Betrieb genommen werden, um bei einer zu gering werdenden Temperaturdifferenz zwischen dem extern zugeführten Wärmeübertragungsmittel und der Temperatur des Wärmeträgermediums in dem unteren Bereich 5 des Behälters 1 eine lokale Abkühlung des Wärmeträgermediums 3 in dem unteren Bereich 5 des Behälters 1 vorzunehmen und die Temperaturdifferenz zum Wärmeübertragungsmittel aus der externen Wärmequelle 6 zu vergrößern.

Mit der Regelungseinrichtung 42 kann auch der Wärmeübergang im Kondensator 14, im Verdampfer 13 und in dem extern angeschossenen Kollektor 7, bzw, den zugeordneten Wärmetauschern 9 und 10 optimiert werden.

Für den Einsatz einer Kompressorwärmepumpe kann vorgesehen sein, die Drehzahl des Kompressors 17 und die Drehzahl einer Förderpumpe 45 des Kollektors 7 zu steuern oder zu regeln. Über die Förderrate sind der Wärmeübergang und damit auch die jeweils übertragbare Wärmemenge vorgebbar und optimierbar.

An Stelle des Kompressors 17 werden bei einer Absorptionswärmepumpe durch die Regelungseinrichtung 42 die Lösungspumpe 29 und der Gasbrenner 31 geregelt.

Eine geregelte Ansteuerung der Wärmepumpe 12 kann auch zweckmäßig sein, wenn dem Wärmeträgermedium 3 absichtlich ein Phasenübergang aufgezwungen wird, um die Latentwärmeenergie nutzen zu können und den Behälter 1 als Latentwärmespeicher zu betreiben. Gegebenenfalls kann es vorteilhaft sein, mittels zusätzlicher Druckmesseinrichtungen den Innendruck in dem Innenraum 2 des Behälters 1 zu überwachen, um eine Beschädigung des Behälters 1 während des Betriebs ausschließen zu können.

Bei dem in Fig. 5 dargestellten Ausführungsbeispiel wurden der untere Wärmetauscher 9 der externen Wärmequelle 6 und der Kondensator 13 der Wärmepumpe 12 kombiniert, wobei der Wärmetauscher 9 als gewendeltes Rohr im Inneren des ebenfalls als gewendeltes Rohr ausgestalteten Kondensators 13 verläuft. Diese Anordnung ermöglicht eine Wärmeübertragung im Gegenflussprinzip.

## Patentansprüche

1. Verfahren zur Bereitstellung nutzbarer Wärmeenergie eines Wärmeträgermediums (3) in einem Innenraum (2) eines thermisch isolierten Behälters (1), wobei das Wärmeträgermedium (3) in einem unteren Bereich (5) des Innenraums (2) eine niedrigere Temperatur als in einem darüber angeordneten Bereich (4) des Innenraums (2) aufweist wobei dem Wärmeträgermedium (3) in dem unteren Wärmeträgermedium (3) in dem unteren Bereich (5) durch Abkühlung Wärme entzogen und dem Wärmeträgermedium (3) in dem darüber angeordneten Bereich (4) durch Erwärmung zugeführt wird, **dadurch gekennzeichnet, dass** die Wärme aus dem unteren Bereich (5) durch mehrere Wärmepumpen (12, 25) (12, 25) in den darüber angeordneten Bereich (4) des Behälters (1) überführt wird, wobei die mehreren Wärmepumpen (12, 25) mit jeweils einem Verdampfer (13, 26) und einem Kondensator (14, 27) im Innenraum (2) des Behälters (1) angeordnet sind, wobei die mehrere Wärmepumpen (12, 25) kaskadenförmig angeordnet sind und wobei der Verdampfer (26) einer übergeordneten Wärmepumpe (25) in der Nähe des Kondensators (14) einer darunter angeordneten Wärmepumpe (12) angeordnet ist.

2. Verfahren nach Anspruch 1, **dadurch gekennzeichnet, dass** die Temperatur des Wärmeträgermediums (3) in dem unteren und/oder in dem oberen Bereich (4, 5) des Behälters (1) erfasst wird und eine Überführung von Wärme aus dem unteren Bereich (5) in den darüber angeordneten Bereich (4) in Abhängigkeit von den erfassten Temperaturwerten durchgeführt wird.

3. Verfahren nach Anspruch 1 oder 2, **dadurch gekennzeichnet, dass** an der Temperatur einer von einer externen Wärmequelle (6) zuführbaren Wärmeenergie gemessen wird und eine Überführung von Wärme aus dem unteren Bereich (5) in den darüber angeordneten Bereich (4) in Abhängigkeit von den erfassten Temperaturwerten durchgeführt wird.

4. Verfahren nach einem der vorangehenden Ansprüche, **dadurch gekennzeichnet, dass** die Temperatur des Wärmeträgermediums (3) in dem unteren Bereich des Behälters (1) bis unterhalb von 0° Celsius abkühlbar ist.

5. Verfahren nach einem der vorangehenden Ansprüche, **dadurch gekennzeichnet, dass** eine Kühlvorrichtung (33) an einen Wärmepumpenkreislauf (16) angeschlossen und von dem Kältemittel der Wärmepumpe (12) betrieben wird.

6. Vorrichtung zur Bereitstellung nutzbarer Wärmeenergie mit einem thermisch isolierten Behälter (1) und mit einem in einem Innenraum (2) des thermisch isolierten Behälters (1) angeordneten Wärmeträgermedium (3) und mit mehreren Wärmepumpen (12, 25) mit jeweils einem Verdampfer (13, 26) und einem Kondensator (14, 27) in dem Innenraum (2) des thermisch isolierten Behälters (1), die eine Umverteilung der in dem Behälter (1) gespeicherten Wärmeenergie aus einem unteren Bereich (5) in einen darüber angeordneten Bereich (4) ermöglichen, wobei die mehreren Wärmepumpen (12, 25) kaskadenförmig angeordnet sind und wobei der Verdampfer (26) einer übergeordneten Wärmepumpe (25) in der Nähe des Kondensators (14) einer darunter angeordneten Wärmepumpe (12) angeordnet ist.

7. Vorrichtung nach Anspruch 6, **dadurch gekennzeichnet, dass** die Vorrichtung eine Regeleinrichtung mit einem Temperaturfühler (40) im Bereich des Verdampfers (13) und/oder mit einem Temperaturfühler (39) im Bereich des Kondensators (14) sowie mit einer Steuereinrichtung (42) zur Steuerung des Betriebs der Wärmepumpe (12) aufweist.

8. Vorrichtung nach Anspruch 6 oder Anspruch 7, **dadurch gekennzeichnet, dass** der Behälter (1) mit einer externen Wärmequelle (6) verbindbar ist und einen Temperaturfühler (43) für die von der externen Wärmequelle (6) zuführbare Wärmeenergie aufweist.

9. Vorrichtung nach einem der Ansprüche 6 bis 8, **dadurch gekennzeichnet, dass** die Wärmepumpe (12) eine Adsorptionswärmepumpe, eine Absorptionswärmepumpe, eine Diffusionsabsorptionswärmepumpe oder eine auf einem anderen geeigneten Kreisprozess basierende Wärmepumpe ist.

10. Vorrichtung nach Anspruch 9, **dadurch gekennzeichnet, dass** die Wärmepumpe (12) eine Absorptionswärmepumpe mit einem Austreiber (30) und mit einem Absorber (28) ist, und dass der Austreiber (30) und der Absorber (28) in dem Behälter (1) angeordnet sind.

11. Vorrichtung nach einem der Ansprüche 6 bis 10, **dadurch gekennzeichnet, dass** das Wärmeträgermedium (3) ein Latentwärmespeichermedium ist.

12. Vorrichtung nach einem der Ansprüche 6 bis 11, **dadurch gekennzeichnet, dass** die Vorrichtung eine Kombination mehrerer unterschiedlicher Wärmepumpen (18, 25) aufweist.

13. Vorrichtung nach einem der Ansprüche 6 bis 12, **dadurch gekennzeichnet, dass** eine Kühlvorrichtung (33) mit dem Wärmepumpenkreislauf (16) verbindbar ist.

## Claims

1. Method for providing usable heat energy of a heat carrier medium (3) in an interior (2) of a thermally insulated container (1), wherein the heat carrier medium (3) has a lower temperature in a lower region (5) of the interior (2) than in a region (4) of the interior (2) arranged there-above, wherein heat is withdrawn from the heat carrier medium (3) in the lower heat carrier medium (3) in the lower region (5) by cooling and heat is supplied to the heat carrier medium (3) in the region (4) arranged there-above by heating, **characterized in that** the heat from the lower region (5) is transferred to the region (4) of the container (1) arranged there-above by multiple heat pumps (12, 25), wherein the multiple heat pumps (12, 25) are arranged in the interior (2) of the container (1) in each case having a vaporizer (13, 26) and a condenser (14, 27), wherein the multiple heat pumps (12, 25) are arranged in a cascaded manner and wherein the vaporizer (26) of a heat pump (25) arranged above is arranged near the condenser (14) of a heat pump (12) arranged there-below.

2. Method according to claim 1, **characterized in that** the temperature of the heat carrier medium (3) in the lower region and/or in the upper region (4, 5) of the container (1) is detected and a transfer of heat from the lower region (5) to the region (4) arranged there-above is performed depending on the detected temperature values.

3. Method according to claim 1 or 2, **characterized in that** on the temperature of heat energy that can be supplied from an external heat source (6) is measured and a transfer of heat from the lower region (5) to the region (4) arranged there-above is performed depending on the detected temperature values.

4. Method according to one of the preceding claims, **characterized in that** the temperature of the heat carrier medium (3) in the lower region of the container (1) can be cooled to below 0 °C.

5. Method according to one of the preceding claims, **characterized in that** a cooling device (33) is connected to a heat pump circuit (16) and operated by the refrigerant of the heat pump (12).

6. Device for providing usable heat energy having a thermally insulated container (1) and a heat carrier medium (3) arranged in an interior (2) of the thermally insulated container (1) and having multiple heat pumps (12, 25) in each case having a vaporizer (13, 26) and a condenser (14, 27) in the interior (2) of the thermally insulated container (1), which enable a redistribution of the heat energy stored in the container (1) from a lower region (5) to a region (4) arranged there-above, wherein the multiple heat pumps (12, 25) are arranged in a cascaded manner and wherein the vaporizer (26) of a heat pump (25) arranged-above is arranged near the condenser (14) of a heat pump (12) arranged there-below.

7. Device according to claim 6, **characterized in that** the device comprises a regulating apparatus having a temperature detector (40) in the region of the vaporizer (13) and/or having a temperature detector (39) in the region of the condenser (14) as well as having a control apparatus (42) for controlling the operation of the heat pump (12).

8. Device according to claim 6 or 7, **characterized in that** the container (1) is connectable to an external heat source (6) and comprises a temperature sensor (43) for the heat energy that can be supplied from the external heat source (6).

9. Device according to one of claims 6 to 8, **characterized in that** the heat pump (12) is an adsorption heat pump, an absorption heat pump, a diffusion absorption heat pump or a heat pump based on another suitable cycle.

10. Device according to claim 9, **characterized in that** the heat pump (12) is an absorption heat pump having an expeller (30) and an absorber (28), and **in that** the expeller (30) and the absorber (28) are arranged in the container (1).

11. Device according to one of claims 6 to 10, **characterized in that** the heat carrier medium (3) is a latent heat carrier medium.

12. Device according to one of claims 6 to 11, **characterized in that** the device comprises a combination of multiple different heat pumps (18, 25).

13. Device according to one of claims 6 to 12, **characterized in that** a cooling device (33) is connectable to the heat pump circuit (16).

## Revendications

1. Procédé destiné à fournir de l'énergie thermique exploitable d'un fluide caloporteur (3) dans un espace intérieur (2) d'un réservoir (1) thermiquement isolé, le fluide caloporteur (3) présentant dans une partie inférieure (5) de l'espace intérieur (2) une température plus basse que dans une partie (4) de l'espace intérieur (2), située au-dessus, de la chaleur étant, par refroidissement, extraite du fluide caloporteur (3) dans la partie inférieure (5) et étant, par échauffement, amenée au fluide caloporteur (3) dans la partie (4) située au-dessus, **caractérisé en ce que** la chaleur est transférée de la partie inférieure (5) à la partie (4) du réservoir (1) située au-dessus au moyen de plusieurs pompes de chaleur (12, 25), les plusieurs pompes de chaleur (12, 25) étant disposées dans l'espace intérieur (2) du réservoir (1) avec respectivement un évaporateur (13, 26) et un condensateur (14, 27), les plusieurs pompes de chaleur (12, 25) étant disposées en forme de cascade, et l'évaporateur (26) d'une pompe de chaleur (25) supérieure étant disposé à proximité du condensateur (14) d'une pompe de chaleur (12) disposée en dessous.

2. Procédé selon la revendication 1, **caractérisé en ce que** la température du fluide caloporteur (3) dans la partie inférieure et/ou dans la partie supérieure (4, 5) du réservoir (1) est enregistrée et **en ce qu'**un transfert de chaleur de la partie inférieure (5) à la partie (4) située au-dessus est réalisé en fonction des valeurs de température enregistrées.

3. Procédé selon la revendication 1 ou 2, **caractérisé en ce que** la température d'une énergie thermique pouvant être amenée par une source de chaleur (6) externe est mesurée et **en ce qu'**un transfert de chaleur de la partie inférieure (5) à la partie (4) disposée au-dessus est réalisé en fonction des valeurs de température enregistrées.

4. Procédé selon l'une quelconque des revendications précédentes, **caractérisé en ce que** la température du fluide caloporteur (3) dans la partie inférieure du réservoir (1) peut être refroidie jusqu'à en dessous de 0° Celsius.

5. Procédé selon l'une quelconque des revendications précédentes, **caractérisé en ce qu'**un dispositif de refroidissement (33) est raccordé à un circuit (16) de pompe de chaleur et **en ce qu'**il est mis en fonctionnement par le fluide de refroidissement de la pompe de chaleur (12).

6. Dispositif destiné à fournir de l'énergie thermique exploitable, comprenant un réservoir (1) thermiquement isolé et comprenant un fluide caloporteur (3) disposé dans un espace intérieur (2) du réservoir (1) thermiquement isolé, et comprenant plusieurs pompes de chaleur (12, 25) munies respectivement d'un évaporateur (13, 26) et d'un condensateur (14, 27) dans l'espace intérieur (2) du réservoir (1) thermiquement isolé, lesquelles permettent une répartition de l'énergie thermique stockée dans le réservoir (1), de la partie inférieure (5) à une partie (4) disposée au-dessus, les plusieurs pompes de chaleur (12, 25) étant disposées en forme de cascade, et l'évaporateur (26) d'une pompe de chaleur (25) supérieure étant disposé à proximité du condensateur (14) d'une pompe de chaleur (12) disposée en dessous.

7. Dispositif selon la revendication 6, **caractérisé en ce que** le dispositif présente une installation de régulation comprenant une sonde de température (40) dans la zone de l'évaporateur (13) et/ou comprenant une sonde de température (39) dans la zone du condensateur (14), ainsi qu'une installation de commande (42) pour la commande du fonctionnement de la pompe de chaleur (12).

8. Dispositif selon la revendication 6 ou la revendication 7, **caractérisé en ce que** le réservoir (1) est raccordable à une source de chaleur (6) externe et **en ce qu'**il présente une sonde de température (43) pour l'énergie thermique pouvant être amenée par la source de chaleur (6) externe.

9. Dispositif selon l'une quelconque des revendications 6 à 8, **caractérisé en ce que** la pompe de chaleur (12) est une pompe de chaleur à adsorption, une pompe de chaleur à absorption, une pompe de chaleur à diffusion-absorption ou une pompe de chaleur basée sur un autre processus cyclique approprié.

10. Dispositif selon la revendication 9, **caractérisé en ce que** la pompe de chaleur (12) est une pompe de chaleur à absorption munie d'un extracteur (30) et d'un absorbeur (28), et **en ce que** l'extracteur (30) et l'absorbeur (28) sont disposés dans le réservoir (1).

11. Dispositif selon l'une quelconque des revendications 6 à 10, **caractérisé en ce que** le fluide caloporteur (3) est un fluide emmagasinant de la chaleur latente.

12. Dispositif selon l'une quelconque des revendications 6 à 11, **caractérisé en ce que** le dispositif présente une combinaison de plusieurs pompes de chaleur (18, 25) différentes.

13. Dispositif selon l'une quelconque des revendications 6 à 12, **caractérisé en ce qu'**un dispositif de refroidissement (33) est raccordable au circuit (16) de pompe de chaleur.
